# FASCICULE DE BREVET EUROPEEN

(11) **EP 2 185 828 B1**
(45) Date de publication et mention de la délivrance du brevet: **11.07.2012**
(21) Numéro de dépôt: 08830050.4
(22) Date de dépôt: 07.08.2008
(51) Int. Cl.: F16B 33/02

(54) **ENSEMBLE DE FIXATION DE DEUX PIÈCES D'ÉQUIPEMENT, NOTAMMENT DE VÉHICULE AUTOMOBILE ET VÉHICULE AUTOMOBILE**
ANORDNUNG ZUR BEFESTIGUNG ZWEIER AUSRÜSTUNGSTEILE, INSBESONDERE FÜR EIN AUTOMOBIL, UND AUTOMOBIL
ASSEMBLY FOR ATTACHING TWO EQUIPMENT PARTS, PARTICULARLY FOR AN AUTOMOBILE, AND AUTOMOBILE

(30) Priorité: 12.09.2007 FR 0757526
(43) Date de publication de la demande: 19.05.2010
(73) Titulaire: Faurecia Interieur Industrie, 92000 Nanterre (FR)
(72) Inventeur: LARD, Frédéric, F-60000 Beauvais (FR)
(74) Mandataire: Jacobson, Claude
(86) Numéro de dépôt international: PCT/FR2008/051470
(87) Numéro de publication internationale: WO 2009/034276

(56) Documents cités:
- US-A- 4 934 859
- US-A- 5 672 037

## Description

La présente invention concerne un ensemble de fixation, en particulier pour la fixation de pièces d'équipement de véhicule automobile.

US 4 934 859 divulgue un ensemble de fixation selon le préambule de la revendication 1.

Un but de l'invention est de proposer un ensemble de fixation qui puisse être mis en oeuvre de façon simple et à faible coût.

A cet effet, l'invention propose un ensemble de fixation de deux pièces d'équipement, notamment de véhicule automobile, comprenant une tige en matière plastique et un écrou destiné à être vissé sur la tige en formant un filetage extérieur dans la tige lors du premier vissage, l'écrou possédant un filetage intérieur comprenant au moins un filet, caractérisé en ce que l'écrou est métallique, le ou chaque filet du filet intérieur possédant deux flancs formant entre eux un angle compris entre 25° et 35°.

Selon d'autres modes de réalisation, l'ensemble de fixation comprend une ou plusieurs des caractéristiques suivantes, prise(s) isolément ou selon toutes les combinaisons techniquement possibles :
- les flancs du ou de chaque filet font entre eux un angle d'environ 30°;
- le filetage comprend au moins un fond de filetage en V délimité en section par deux lignes formant un V avec un angle au sommet compris entre 140 et 160° ;
- la hauteur du ou de chaque filet prise entre sa base et sa crête est comprise entre 0,4 mm et 1,5 mm ;
- la crête du ou de chaque filet est tronquée ;
- le pas du filetage est compris entre 1 et 2.5 mm, de préférence entre 1.5 et 1.8 mm;
- l'écrou possède une surface extérieure munie de méplats définissant une tête hexagonale ;
- l'écrou possède à une des ses extrémité axiale une collerette d'appui faisant saillie radialement vers l'extérieur ;
- la tige est venue de matière avec un support solidaire d'une des pièces d'équipement de véhicule automobile ;
- une des pièces d'équipement est un panneau d'habillage intérieur de porte.

L'invention concerne également un véhicule automobile comprenant un ensemble de fixation tel que défini ci-dessus.

L'invention et ses avantages seront mieux compris à la lecture de la description qui va suivre, donnée uniquement à titre d'exemple et faite en se référant aux dessins annexés sur lesquels :
- les Figures 1 et 2 sont des vues schématiques en coupe d'un ensemble de fixation selon l'invention respectivement avant et après assemblage ;
- la Figure 3 est une vue de dessus la Figure 2 ; et
- la Figure 4 est une vue en coupe d'un écrou de l'ensemble de fixation des Figures 1 à 3.

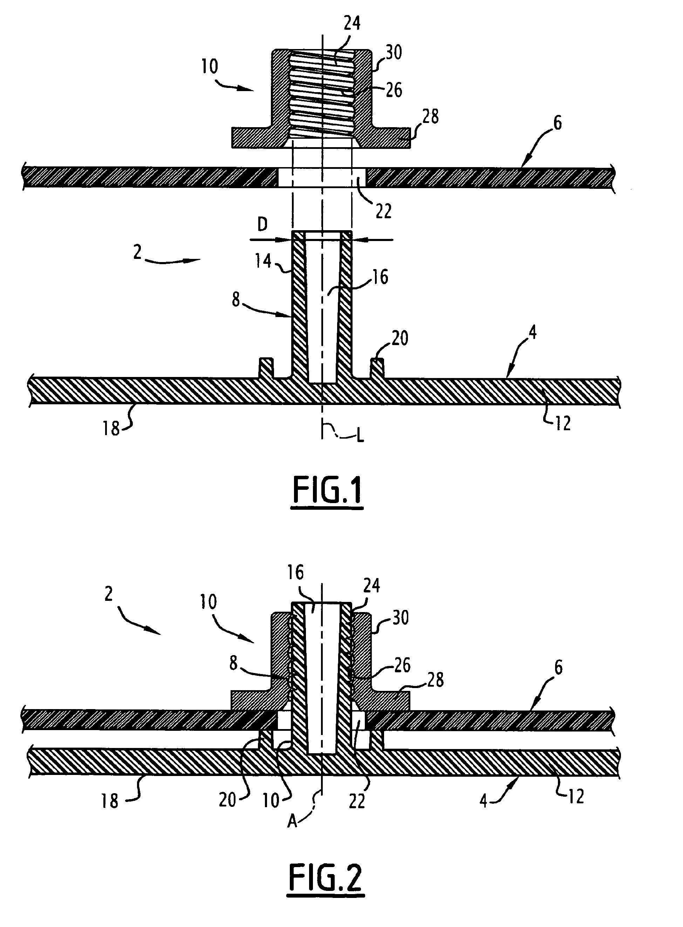

Tel que représenté sur les Figures 1 et 2, un ensemble de fixation 2 est destiné à assurer la fixation entre deux pièces 4, 6 d'équipement de véhicule automobile. Les pièces 4, 6 sont par exemple des pièces d'habillage intérieur d'une porte ou d'une planche de bord.

L'ensemble 2 comprend une tige en matière plastique 8 et un écrou 10 métallique.

La tige 8 est venue de moulage avec un panneau de parement 12 d'une première pièce 4 parmi les deux pièces 4, 6.

La tige 8 est de forme sensiblement cylindrique d'axe L. Elle possède une surface extérieure 14 sensiblement cylindrique d'axe L, possédant de préférence un léger angle de dépouille pour permettre son démoulage.

La tige 8 comprend un évidement axial 16 borgne débouchant du côté de l'extrémité libre de la tige 8, et fermé du côté opposé. L'évidement 16 évite la reformation de retassures sur la surface apparente 18 du panneau 12 lors du refroidissement après moulage.

La première pièce 4 possède une nervure d'appui 20 faisant saillie du panneau 12 du même côté que la tige 8 et entourant la tige 8. La nervure d'appui est circulaire ; cependant elle peut alternativement avoir une forme non circulaire, notamment en croix ou en étoile. Cette nervure 20 sert à rigidifier la base de la tige 8.

La deuxième pièce 6 possède un orifice 22 pour le passage de la tige 8 au travers de la deuxième pièce 6.

L'écrou 10 est destiné à être engagé sur l'extrémité libre de la tige 8 s'étendant au travers de l'orifice 22 en prenant appui sur la deuxième pièce 6 du côté opposé à la première pièce 4, pour serrer la deuxième pièce 6 contre la première pièce 4.

L'écrou 10 comprend un alésage 24 d'axe L muni d'un filetage intérieur 26.

L'écrou 10 comprend à une extrémité d'insertion de la tige 8 dans l'alésage 24 une collerette 28 d'appui en saillie radialement vers l'extérieur, et destinée à venir en appui contre la deuxième pièce 6.

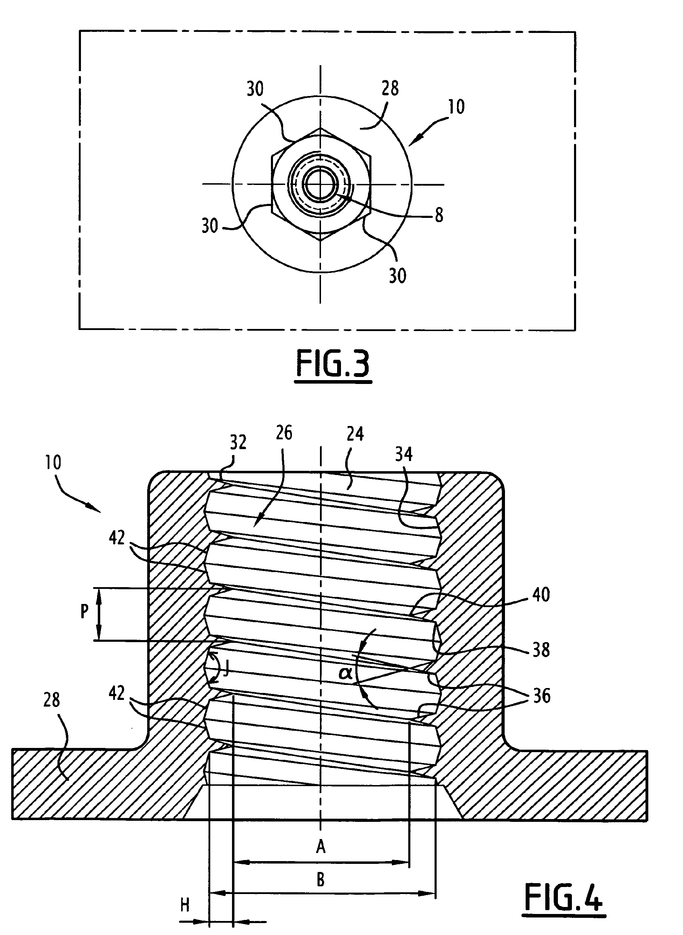

Tel que représenté sur la Figure 3, l'écrou 10 possède sur sa surface extérieure des pans 30 pour permettre l'entraînement en rotation de l'écrou 10 à l'aide d'un outil. Les pans 30 forment ici une tête d'entraînement hexagonale.

Tel que représenté sur la Figure 4, le filetage 26 possède un filet 32 et un fond de filetage 34.

Le filet 32 possède une forme générale triangulaire et comprend deux flancs 36. Chaque flanc 36 s'étend entre une ligne de base 38 du filet 32 et une ligne de crête 40 du filet 32. La crête du filet 32 est tronquée.

Les flancs 36 forment entre eux un angle α compris entre 25° et 35°, de préférence environ égal à 30°.

Les flancs 36 sont symétriques par rapport à un plan radial perpendiculaire à l'axe L de l'alésage 24. Ainsi, chaque flancs 36 forme avec un plan radial un angle radial un angle compris entre 12,5° et 17,5°, de préférence environ égal à 15°.

La hauteur H du filet 36 est comprise entre 4 et 8 mm.

Le pas P du filet est compris entre 1 et 2,5 mm.

Le fond de filet 34 ménage un évidement en creux à la base du filet 32.

En section, le fond de filet 34 est défini par deux lignes 42 rectilignes, chaque ligne s'étendant à partir d'une ligne de base 38 en direction du centre du fond de filet 34. Les lignes forment entre elles un angle J compris entre 140° et 160°, de préférence environ égal à 150°. Le s lignes 42 sont symétriques par rapport à un plan radial passant par le centre du fond de filet 34.

Dans l'exemple illustré, le fond de filet 34 possède en section une forme en V. Les lignes 42 se coupent.

Le diamètre A du cylindre fictif passant par la crête du filet 32 est compris entre 5 et 11,5 mm.

Le diamètre B du cylindre fictif passant par la base du filet 32 est compris de préférence entre 6 et 12 mm.

En revenant aux figures 1 et 2, la surface extérieure 14 de la tige 8 initialement lisse et possède un diamètre extérieur D inférieur ou égal au diamètre B, et supérieur au diamètre A.

Lors du vissage de l'écrou 10 sur la tige 8, le filet 32 creuse une rainure dans la surface extérieure 14 de la tige 8. Le filet 32 avec un angle α au sommet réduit s'insert facilement dans la matière plastique lorsque l'on visse l'écrou 10 sur la tige 8.

Le filet 32 est dépourvu d'encoches de taraudage à son extrémité adjacente à l'extrémité d'insertion de la tige 8. Ainsi, le filet 32 ne retire pas de la matière de la tige 8. La matière de la tige 8 est refoulée par le filet 32 vers le fond de filet 34. L'évidement délimité par le fond de filet 34 en creux permet à la matière de fluer vers cet évidement, sans bloquer le vissage de l'écrou 10.

Le profil du filetage 26 et les angles choisis permettent de ménager un espace suffisant pour la matière refoulée.

Ainsi, de préférence, l'aire délimitée en section entre le fond de filet 34 et une ligne passage par les lignes de base 42 du filet 32 est supérieure ou égale à l'aire de la section du filet 32.

Le couple de premier vissage permettant de faire progresser l'écrou 10 le long de la tige 8 en formant le filetage extérieur de la tige 8, lors du premier engagement de l'écrou 10 sur la tige 8, est compris de préférence entre 0,3 et 0,9 N.m.

Le couple de serrage final de l'écrou 10 est compris de préférence entre 0,5 et 3 N.m. Ce couple de serrage est bien entendu supérieur au couple de premier vissage.

Ainsi, l'écrou 10 peut être vissé sur la tige 8 facilement, avec un couple de vissage réduit, un couple de serrage important assurant un maintien satisfaisant des pièces 4 et 6, et en formant sur la tige 8 un filetage extérieur propre permettant le dévissage ultérieur de l'écrou 8.

L'écrou facilement dévissable facilite le recyclage en permettant le désassemblage de différentes pièces facilement. Les pièces sont séparées en fonction de la matière qui les constitue.

Dans une variante, le filetage 26 comprend plusieurs filets, auquel cas chaque fond de filetage s'étend entre deux filets adjacents.

L'ensemble 2 permet la fixation des pièces 4 et 6 selon un autre mode de mise en oeuvre, dans lequel l'écrou 10 n'est pas utilisé et la tige 8 inséré au travers de l'orifice 22 est déformée pour former un rivet en matière plastique.

L'utilisation de l'écrou 10 est appropriée pour les petites séries dans lesquelles il n'est pas utile d'investir dans des outils lourds et coûteux de formation de rivets en matière plastique. L'utilisation de la tige pour former un river en matière plastique est mieux adaptée pour la grande série.

Il est à noter que cet ensemble de fixation peut également être utilisé dans d'autres domaines, tels que le domaine de l'électroménager ou le domaine du jouet.

## Revendications

1. Ensemble de fixation de deux pièces (4, 6) d'équipement, notamment de véhicule automobile, comprenant une tige (8) en matière plastique et un écrou (10) métallique destiné à être vissé sur la tige (8) en formant un filetage extérieur dans la tige (8) lors du premier vissage, l'écrou (10) possédant un filetage (26) intérieur comprenant au moins un filet (32), **caractérisé en ce que** l'écrou (10) est métallique, le ou chaque filet (32) du filetage (26) intérieur possédant deux flancs (36) formant entre eux un angle compris entre 25° et 35 °.

2. Ensemble selon la revendication 1, dans lequel les flancs (36) du ou de chaque filet (32) font entre eux un angle d'environ 30°.

3. Ensemble selon l'une quelconque des revendications précédentes, **caractérisé en ce que** le filetage comprend au moins un fond de filetage (34) en V délimité en section par deux lignes (42) formant un V avec un angle au sommet compris entre 140 et 160°.

4. Ensemble selon l'une quelconque des revendications précédentes, dans lequel la hauteur (H) du ou de chaque filet (32) prise entre sa base et sa crête est comprise entre 0,4 mm et 1,5 mm.

5. Ensemble selon l'une quelconque des revendications précédentes, **caractérisé en ce que** la crête du ou de chaque filet (32) est tronquée.

6. Ensemble selon l'une quelconque des revendications précédentes, **caractérisé en ce que** le pas du filetage est compris entre 1 et 2.5 mm, de préférence entre 1.5 et 1.8 mm.

7. Ensemble selon l'une quelconque des revendications précédentes, **caractérisé en ce que** l'écrou (10) possède un surface extérieure munie de méplats définissant une tête hexagonale.

8. Ensemble selon l'une quelconque des revendications précédentes, **caractérisé en ce que** l'écrou (10) possède à une des ses extrémité axiale une collerette d'appui faisant saillie radialement vers l'extérieur.

9. Ensemble selon l'une quelconque des revendications précédentes, dans lequel la tige (8) est venue de matière avec un support (12) solidaire d'une des pièces (4, 6) d'équipement de véhicule automobile.

10. Ensemble selon l'une quelconque des revendications précédentes, **caractérisé en ce qu'**une des pièces d'équipement est un panneau d'habillage intérieur de porte.

11. Véhicule automobile comprenant un ensemble selon l'une quelconque des revendications précédentes.

## Claims

1. Assembly for attaching two equipment parts (4, 6), in particular of a motor vehicle, comprising a rod (8) made of plastic material and a metal screw (10) intended to be screwed onto the rod (8) forming an external thread arrangement in the rod (8) during the first screwing action, wherein the screw (10) has an internal thread arrangement (26) comprising at least one thread (32), **characterised in that** the screw (10) is made of metal, wherein the or each thread (32) of the internal thread arrangement (26) has two flanks (36) forming between them an angle in the range of 25° to 35°.

2. Assembly according to claim 1, in which the flanks (36) of the or each thread (32) form between them an angle of about 30°.

3. Assembly according to any one of the preceding claims, **characterised in that** the thread arrangement comprises at least one V-shaped thread base (34) delimited sectionally by two lines (42) forming a V with an angle at the point in the range of between 140° and 160°.

4. Assembly according to any one of the preceding claims, in which the height (H) of the or each thread (32) measured between its base and its crest is in the range of between 0.4 mm and 1.5 mm.

5. Assembly according to any one of the preceding claims, **characterised in that** the crest of the or each thread (32) is truncated.

6. Assembly according to any one of the preceding claims, **characterised in that** the pitch of the thread arrangement is in the range of between 1 and 2.5 mm, preferably between 1.5 and 1.8 mm.

7. Assembly according to any one of the preceding claims, **characterised in that** the screw (10) has an outside surface provided with flattened faces defining a hexagonal head.

8. Assembly according to any one of the preceding claims, **characterised in that** on one of its axial ends the screw (10) has a support collar sloping radially towards the outside.

9. Assembly according to any one of the preceding claims, in which the rod (8) is formed in one piece with an integral support (12) of one of the motor vehicle equipment parts (4, 6).

10. Assembly according to any one of the preceding claims, **characterised in that** one of the equipment parts is an interior lining panel of a door.

11. Motor vehicle comprising an assembly according to any one of the preceding claims.

## Patentansprüche

1. Satz von Elementen zur Verbindung zweier Ausstattungsteile (4, 6), insbesondere für Kraftfahrzeuge, bestehend aus einem Stift (8) aus Kunststoff und einer Mutter (10) aus Metall, die dazu bestimmt ist, auf den Stift (8) geschraubt zu werden, wobei beim ersten Aufschrauben ein Außengewinde im Stift (8) ausgebildet wird, wobei die Mutter (10) ein Innengewinde (26) aufweist, das mindestens einen Gewindegang (32) aufweist, **dadurch gekennzeichnet, dass** die Mutter (10) aus Metall besteht, wobei der oder jeder Gewindegang (32) des Innengewindes (26) zwei Flanken (36) aufweist, die einen Winkel einschließen, der zwischen 25° und 35° liegt.

2. Verbindungselementensatz nach Patentanspruch 1, in dem die Flanken (36) des oder jedes Gewindeganges (32) einen Winkel von ungefähr 30° einschließen.

3. Verbindungselementensatz nach irgendeinem der vorangehenden Patentansprüche, **dadurch gekennzeichnet, dass** das Gewinde mindestens einen V-förmigen Gewindegrund (34) aufweist, der im Querschnitt durch zwei Linien (42) begrenzt ist, die ein V mit einem Spitzenwinkel zwischen 140 und 160° bilden.

4. Verbindungselementensatz nach irgendeinem der vorangehenden Patentansprüche, in dem die Höhe (H) des oder jedes Gewindeganges (32) zwischen seiner Basis und seiner Spitze zwischen 0,4 mm und 1,5 mm liegt.

5. Verbindungselementensatz nach irgendeinem der vorangehenden Patentansprüche, **dadurch gekennzeichnet, dass** die Spitze des oder jedes Gewindeganges (32) stumpf ist.

6. Verbindungselementensatz nach irgendeinem der vorangehenden Patentansprüche, **dadurch gekennzeichnet, dass** die Ganghöhe des Gewindes zwischen 1 und 2,5 mm liegt, vorzugsweise zwischen 1,5 und 1,8 mm.

7. Verbindungselementensatz nach irgendeinem der vorangehenden Patentansprüche, **dadurch gekennzeichnet, dass** die Mutter (10) über eine Außenfläche verfügt, die mit Abflachungen versehen ist, die einen Sechskantkopf begrenzen.

8. Verbindungselementensatz nach irgendeinem der vorangehenden Patentansprüche, **dadurch gekennzeichnet, dass** die Mutter (10) an einem ihrer Enden in Achsenrichtung über einen Stützkragen verfügt, der radial nach außen hervorsteht.

9. Verbindungselementensatz nach irgendeinem der vorangehenden Patentansprüche, in dem der Stift (8) einem Träger (12) angeformt ist, der mit einem der Ausstattungsteile (4, 6) des Kraftfahrzeugs fest verbunden ist.

10. Verbindungselementensatz nach irgendeinem der vorangehenden Patentansprüche, **dadurch gekennzeichnet, dass** eins der Ausstattungsteile eine Innenverkleidungsplatte einer Tür ist.

11. Kraftfahrzeug, das einen Verbindungselementensatz nach irgendeinem der vorangehenden Patentansprüche aufweist.
